# EUROPEAN PATENT APPLICATION

(11) **EP 4 640 357 A1**
(43) Date of publication of application: **29.10.2025**
(21) Application number: 25171106.5
(22) Date of filing: 16.04.2025
(51) Int. Cl.: B23K 9/32, B23K 37/006, F16P 1/06

(54) **WELDING TORCH**

(30) Priority: 22.04.2024 JP 2024068996
(71) Applicant: DAIHEN Corporation, Yodogawa-ku Osaka-shi, Osaka 532-8512 (JP)
(72) Inventor: NAKAMURA, Yousuke, Osaka-shi, Osaka 532-8512 (JP); MINAMOTO, Tetsushi, Osaka-shi, Osaka 532-8512 (JP)
(74) Representative: Zacco GmbH

(57) **Abstract**

A welding torch (100) includes a torch main body (110), a torch holder (130), an operation switch (140), and a guard member (200, 200A). In the torch holder (130), a part of the torch main body (110) is accommodated, and the torch holder (130) is held by an operator. The operation switch (140) is arranged in the torch holder (130) and it is to be operated by the operator when the operator starts welding. The guard member (200, 200A) is configured to be attachable and removable in the vicinity of the operation switch (140) in the torch holder (130). While the guard member (200, 200A) is attached to the torch holder (130), in a direction of operation of the operation switch (140), a distance from a reference plane (135) of the torch holder (130) to a projection end (230) of the guard member (200, 200A) is equal to or longer than a distance from the reference plane (135) to a projection end (141) of the operation switch (140).

## Description

### CROSS REFERENCE TO RELATED APPLICATIONS

This nonprovisional application is based on Japanese Patent Application No. 2024-068996 filed with the Japan Patent Office on April 22, 2024, the entire contents of which are hereby incorporated by reference.

### BACKGROUND OF THE INVENTION

### Field of the Invention

The present disclosure relates to a welding torch, and more particularly to a technique to prevent a malfunction of a welding torch to be operated by a welding operator as being held in his/her hand in welding.

### Description of the Background Art

Japanese Patent Laying-Open No. 2008-246528 discloses a configuration of a semiautomatic arc welding apparatus including a welding torch to be operated by a welding operator as being held in his/her hand in welding. The welding torch is provided with a locking lever to disallow inadvertent operation of an operation switch thereof when welding is not performed.

### SUMMARY OF THE INVENTION

In the welding torch in Japanese Patent Laying-Open No. 2008-246528, while the locking lever is positioned in a perpendicular direction, a projection provided in the locking lever locks operation of the operation lever, so that inadvertent operation of the operation switch of the welding torch can be prevented.

A skilled welding operator, on the other hand, may desire to keep using a welding torch configured under a conventional specification. In such a case, change of the welding torch in accordance with preference of the welding operator necessitates replacement of a whole torch holder of the welding torch. Then, a user has to individually prepare torch holders corresponding to both of these specifications, and hence extra cost may be incurred. A manufacturer of welding torches is also required to manufacture torch holders under different specifications, and hence production cost may increase.

The present disclosure was made to solve such problems, and an object thereof is to meet a user's request for different specifications of torch holders while increase in cost is suppressed in a welding torch included in a semiautomatic arc welding apparatus.

A welding torch according to one aspect of the present disclosure includes a torch main body, a torch holder, an operation switch, and a guard member. In the torch holder, a part of the torch main body is accommodated, and the torch holder is held by an operator. The operation switch is arranged in the torch holder and it is to be operated by the operator when the operator starts welding. The guard member is configured to be attachable and removable in the vicinity of the operation switch in the torch holder. While the guard member is attached to the torch holder, in a direction of operation of the operation switch, a distance from a reference plane of the torch holder to a projection end of the guard member is equal to or longer than a distance from the reference plane to a projection end of the operation switch.

A welding torch according to another aspect of the present disclosure includes a torch main body, a torch holder, an operation switch, and a guard member. In the torch holder, a part of the torch main body is accommodated, and the torch holder is held by an operator. The operation switch is arranged in the torch holder and it is to be operated by the operator when the operator starts welding. The guard member is configured to be attachable and removable in the vicinity of the operation switch in the torch holder. While the guard member is attached to the torch holder, in a direction of operation of the operation switch, a distance from a reference plane of the torch holder to a projection end of the guard member is equal to or longer than an amount of stroke of movement of the operation switch during a period of transition from a non-operated state to a welding start state.

The foregoing and other objects, features, aspects, and advantages of this invention will become more apparent from the following detailed description of this invention when taken in conjunction with the accompanying drawings.

### BRIEF DESCRIPTION OF THE DRAWINGS

Fig. 1 is an overall schematic diagram of a semiautomatic arc welding apparatus including a welding torch according to a first embodiment.
Fig. 2 is a perspective view of the welding torch in Fig. 1.
Fig. 3 is a side view of the welding torch in Fig. 1.
Fig. 4 is a diagram for illustrating a state of attachment of a guard member to a torch holder.
Fig. 5 is a diagram for illustrating a state in which the guard member has been removed from the torch holder.
Fig. 6 is a diagram for illustrating a state in which an auxiliary member instead of the guard member is attached to the torch holder.
Fig. 7 is a diagram for illustrating a method of fixing a guard member in a welding torch according to a second embodiment.

### DESCRIPTION OF THE PREFERRED EMBODIMENTS

An embodiment of the present disclosure will be described in detail below with reference to the drawings. The same or corresponding elements in the drawings have the same reference characters allotted and description thereof will not be repeated.

### [First Embodiment]

### (Configuration of Semiautomatic Arc Welding Apparatus)

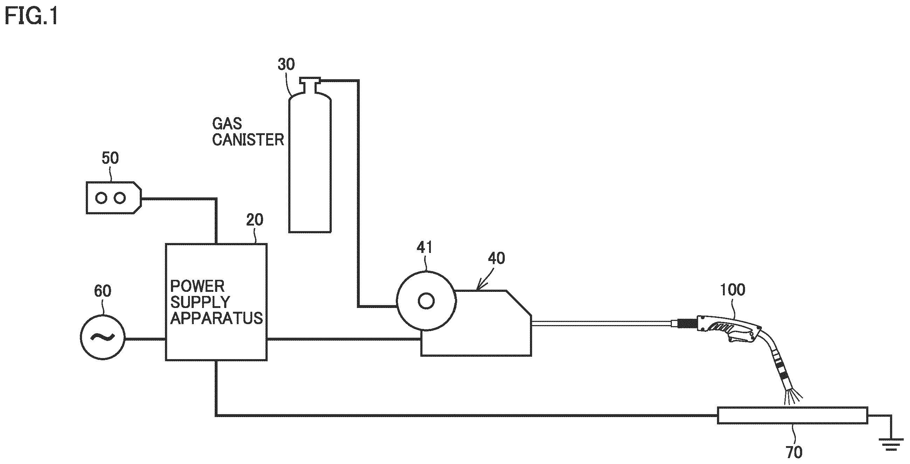

Fig. 1 is an overall schematic diagram of a semiautomatic arc welding apparatus 10 including a welding torch 100 according to a first embodiment. Semiautomatic arc welding apparatus 10 includes, in addition to welding torch 100, a power supply apparatus 20 for welding, a gas canister 30, a wire feed apparatus 40, and a remote control box 50 for operation.

Wire feed apparatus 40 is equipped with a wire reel 41. Wire feed apparatus 40 feeds a welding wire wound around wire reel 41 to welding torch 100.

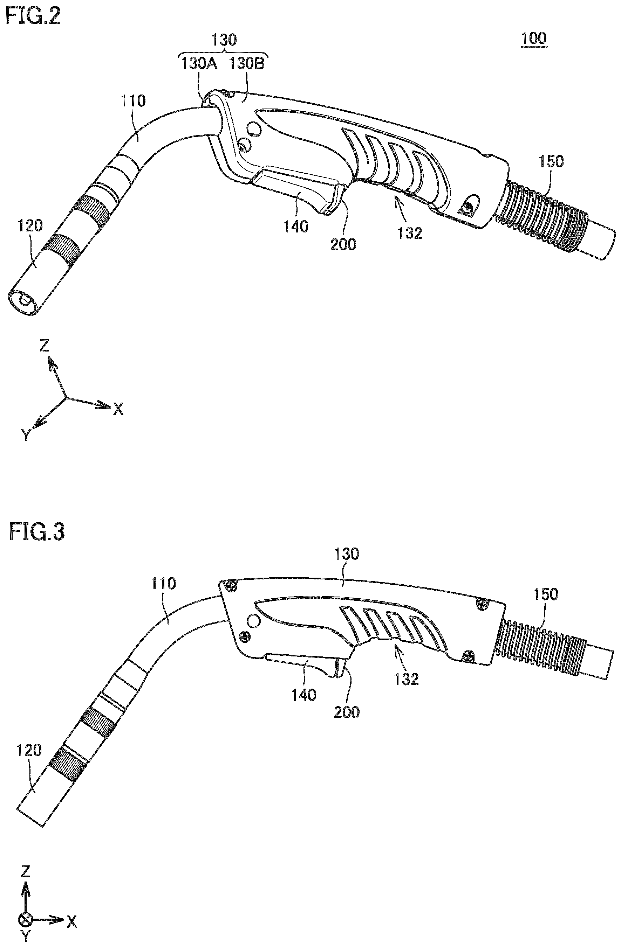

Welding torch 100 is held by a welding operator. As will be described later with reference to Fig. 2, welding torch 100 is provided with an operation switch 140 to be operated by an operator. The operator starts and stops welding by operating operation switch 140.

Power supply apparatus 20 is connected to an external system power supply 60, and supplies electric power for welding to the welding wire fed to welding torch 100. A welding current and a welding voltage for welding can be set with the use of remote control box 50. Power supply apparatus 20 is connected also to an object 70 to be welded connected to a ground potential. As electric power is supplied to the welding wire in welding torch 100 brought closer to object 70 as a result of operation by the operator, arc is generated between welding torch 100 and object 70 and welding is performed.

In gas canister 30, insulating shield gas is stored. Shield gas is supplied around the welding wire from welding torch 100 in welding. This shield gas suppresses diffusion of arc generated between the welding wire and object 70 to surroundings, and arc can be directed to object 70.

### (Detailed Configuration of Welding Torch)

A detailed configuration of welding torch 100 will now be described with reference to Figs. 2 and 3. Fig. 2 is a perspective view of welding torch 100 and Fig. 3 is a side view of welding torch 100.

Referring to Figs. 2 and 3, welding torch 100 includes a torch main body 110, a nozzle 120, a torch holder 130, operation switch 140, a power cable 150, and a guard member 200.

Nozzle 120 is attached to one end of torch main body 110, and power cable 150 is connected to the other end thereof. The welding wire from wire feed apparatus 40 and shield gas from gas canister 30 are supplied inside power cable 150. The welding wire is fed to nozzle 120 through the center of torch main body 110. Shield gas is emitted from nozzle 120.

Torch holder 130 includes two holder portions 130A and 130B which are in symmetry. Holder portions 130A and 130B are each in an elongated shape along a direction of extension of torch main body 110 and power cable 150, and fixed by a fastening member such as a bolt while they sandwich torch main body 110 and power cable 150 therebetween. A part of torch main body 110 is thus accommodated in torch holder 130. In welding, a grip portion 132 which is a thin part of torch holder 130 is held by the operator.

In torch holder 130, operation switch 140 is provided at a position closer to nozzle 120 relative to grip portion 132. When the operator operates operation switch 140 and an ON state is set while the operator holds torch holder 130, the welding wire is fed to welding torch 100 and electric power and shield gas are supplied, and welding is started. When the operator quits operation of operation switch 140 and an OFF state is set, welding is stopped.

Guard member 200 is arranged in a region between grip portion 132 and operation switch 140. Guard member 200 is a member provided to prevent operation switch 140 from being inadvertently set to the ON state as a result of contact of an object with operation switch 140 when the operator places welding torch 100 on a floor or the like.

In the description hereafter, a direction of extension of torch holder 130 in the elongated shape is defined as an X-axis direction, a direction from holder portion 130B toward holder portion 130A is defined as a Y-axis direction, and a direction in which operation switch 140 is arranged in torch holder 130 is defined as a Z-axis direction. A positive direction along a Z axis may also be referred to as an upward direction and a negative direction along the Z axis may also be referred to as a downward direction.

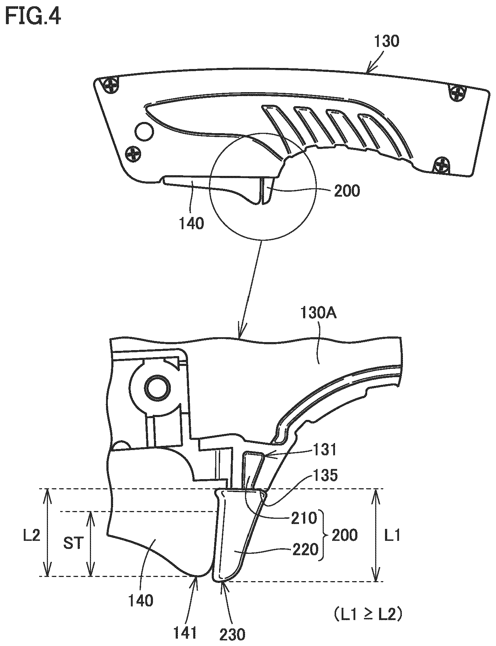

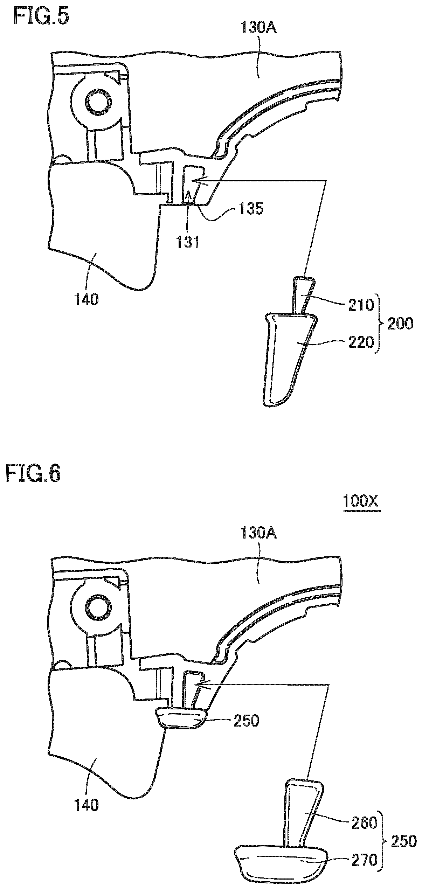

Attachment of guard member 200 to torch holder 130 will now be described in detail with reference to Figs. 4 and 5. A lower tier in Fig. 4 and Fig. 5 are each an enlarged view of guard member 200 and a portion around the same in a state in which holder portion 130B of torch holder 130 has been removed.

Guard member 200 includes a first portion 210 located inside torch holder 130 while the guard member is fixed to torch holder 130, and a second portion 220 located outside torch holder 130. First portion 210 of guard member 200 projects upward from a portion of connection to second portion 220 and substantially in such a wedge shape that an upper side is larger in dimension than a lower side. Second portion 220 of guard member 200 is substantially in a shape of a quadrangular pyramid that extends downward from a portion of connection to first portion 210.

Each of holder portions 130A and 130B is provided with an opening 131 in a wedge shape compatible with the shape of first portion 210 of guard member 200. By coupling holder portion 130A and holder portion 130B to each other while first portion 210 is engaged with this opening 131, guard member 200 is fixed to torch holder 130 without the use of a fastening member. In other words, by disassembling torch holder 130, guard member 200 is attachable to and removable from torch holder 130.

While guard member 200 is fixed to torch holder 130, a distance (a projection length L1) from an end surface (a reference plane 135) on a lower side of holder portion 130A to a projection end 230 of second portion 220 in the direction of operation (that is, the downward direction) of operation switch 140 is longer than a distance (a projection length L2) from reference plane 135 to a projection end 141 on a lower side of operation switch 140 (L1 ≥ L2). By setting projection length L1 of guard member 200 from torch holder 130 to such a dimension, contact of another object with operation switch 140 when torch holder 130 is placed on the floor or the like is suppressed. Therefore, inadvertent switch-ON of operation switch 140 which results in unintended start of welding can be prevented.

Projection length L1 of guard member 200 may be equal to or longer than an amount of stroke ST of movement of operation switch 140 during a period of transition from a non-operated state to the ON state (that is, to a welding start state). In this case as well, even if another object comes in contact with operation switch 140, guard member 200 can prevent operation switch 140 from being switched ON, and hence unintended welding can be prevented.

By providing the guard member as above in the torch holder, unintended start of welding can be prevented. Some skilled operators who are familiar with a welding torch under such a specification as not including the guard member may desire to keep using the welding torch under the conventional specification. In such a case, if the torch holder has been used with which the guard member had been integrated, in order to adapt to preference of the operator, the whole torch holder should be replaced. Then, a user has to individually prepare torch holders under both of these specifications, and extra cost may be incurred. A manufacturer of welding torches is also required to manufacture torch holders under different specifications, and production cost may increase.

As in welding torch 100 in the first embodiment, on the other hand, by individually forming guard member 200 from a member different from torch holder 130 and configuring guard member 200 to be attachable to and removable from torch holder 130, a torch holder common to two specifications can be used and the specification can readily be changed. Furthermore, a component to be replaced can be smaller than in replacement of the whole torch holder. Therefore, cost for holding inventory at a user and manufacturing cost at a manufacturer can be reduced.

Under the specification not including guard member 200, works can be done with guard member 200 having been removed from torch holder 130. As in a welding torch 100X in Fig. 6, however, an auxiliary member 250 shorter in length of projection from reference plane 135 than operation switch 140 may be attached to torch holder 130, instead of guard member 200.

Similarly to guard member 200, auxiliary member 250 also includes a first portion 260 located inside torch holder 130 while it is fixed to torch holder 130, and a second portion 270 located outside torch holder 130. First portion 260 of auxiliary member 250 is substantially in a wedge shape similarly to first portion 210 of guard member 200. Auxiliary member 250 is fixed to torch holder 130 by coupling holder portion 130A and holder portion 130B to each other while first portion 260 is engaged with opening 131 in holder portions 130A and 130B.

### [Second Embodiment]

A configuration in which a guard member is attachable to and removable from the torch holder without disassembly of the torch holder will be described in a second embodiment.

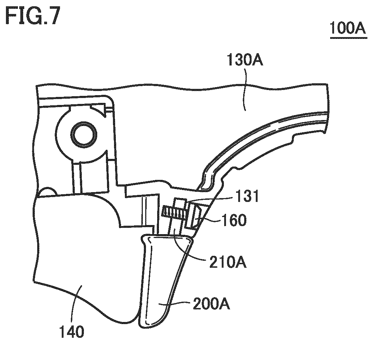

Fig. 7 is a diagram for illustrating a method of fixing a guard member 200A in a welding torch 100A according to the second embodiment.

In guard member 200A of welding torch 100A, a first portion 210A located inside torch holder 130 is substantially in a shape of a parallelepiped. Thus, while holder portion 130A and holder portion 130B are coupled to each other, first portion 210A can be inserted in opening 131 provided in holder portions 130A and 130B. In this case, however, guard member 200A as it is cannot be fixed to torch holder 130, and hence guard member 200A is fixed to torch holder 130 with a fastening member 160 such as a bolt.

In the case of such a fixing method as well, by individually forming the guard member from a member different from the torch holder, change to a specification adapted to preference of the operator can readily be made, and cost at the user and the manufacturer can be reduced.

### [Aspects]

Illustrative embodiments described above are understood by a person skilled in the art as specific examples of aspects below.

(Clause 1) A welding torch according to one aspect includes a torch main body, a torch holder, an operation switch, and a guard member. In the torch holder, a part of the torch main body is accommodated, and the torch holder is held by an operator. The operation switch is arranged in the torch holder and it is to be operated by the operator when the operator starts welding. The guard member is configured to be attachable and removable in the vicinity of the operation switch in the torch holder. While the guard member is attached to the torch holder, in a direction of operation of the operation switch, a distance from a reference plane of the torch holder to a projection end of the guard member is equal to or longer than a distance from the reference plane to a projection end of the operation switch.

(Clause 2) A welding torch according to one aspect includes a torch main body, a torch holder, an operation switch, and a guard member. In the torch holder, a part of the torch main body is accommodated, and the torch holder is held by an operator. The operation switch is arranged in the torch holder and it is to be operated by the operator when the operator starts welding. The guard member is configured to be attachable and removable in the vicinity of the operation switch in the torch holder. While the guard member is attached to the torch holder, in a direction of operation of the operation switch, a distance from a reference plane of the torch holder to a projection end of the guard member is equal to or longer than an amount of stroke of movement of the operation switch during a period of transition from a non-operated state to a welding start state.

(Clause 3) In the welding torch described in Clause 1 or 2, the torch holder includes a first holder portion and a second holder portion configured to sandwich the torch main body therebetween. The guard member is fixed to the torch holder by being sandwiched between the first holder portion and the second holder portion.

(Clause 4) In the welding torch described in Clause 3, the guard member includes a first portion located inside the torch holder while the guard member is fixed to the torch holder and a second portion located outside the torch holder. The first portion is in a wedge shape.

(Clause 5) In the welding torch described in Clause 4, each of the first holder portion and the second holder portion is provided with an opening in a shape compatible with the first portion. The guard member is fixed to the torch holder by engagement of the first portion with the opening in each holder portion.

(Clause 6) In the welding torch described in Clause 3, the guard member includes a first portion located inside the torch holder while the guard member is fixed to the torch holder and a second portion located outside the torch holder. The welding torch further includes a fastening member configured to fix the first portion to the torch holder.

Though embodiments of the present invention have been described, it should be understood that the embodiments disclosed herein are illustrative and non-restrictive in every respect. The scope of the present invention is defined by the terms of the claims and is intended to include any modifications within the scope and meaning equivalent to the terms of the claims.

## Claims

1. A welding torch (100) comprising:
a torch main body (110);
a torch holder (130) in which a part of the torch main body (110) is accommodated, the torch holder (130) being held by an operator;
an operation switch (140) arranged in the torch holder (130), the operation switch (140) being to be operated by the operator when the operator starts welding; and
a guard member (200, 200A) configured to be attachable and removable in vicinity of the operation switch (140) in the torch holder (130), wherein
while the guard member (200, 200A) is attached to the torch holder (130), in a direction of operation of the operation switch (140), a distance from a reference plane (135) of the torch holder (130) to a projection end (230) of the guard member (200, 200A) is equal to or longer than a distance from the reference plane (135) to a projection end (141) of the operation switch (140).

2. A welding torch (100) comprising:
a torch main body (110);
a torch holder (130) in which a part of the torch main body (110) is accommodated, the torch holder (130) being held by an operator;
an operation switch (140) arranged in the torch holder (130), the operation switch (140) being to be operated by the operator when the operator starts welding; and
a guard member (200, 200A) configured to be attachable and removable in vicinity of the operation switch (140) in the torch holder (130), wherein
while the guard member (200) is attached to the torch holder (130), in a direction of operation of the operation switch (140), a distance from a reference plane (135) of the torch holder (130) to a projection end (230) of the guard member (200, 200A) is equal to or longer than an amount of stroke of movement of the operation switch (140) during a period of transition from a non-operated state to a welding start state.

3. The welding torch (100) according to claim 1 or 2, wherein
the torch holder (130) includes a first holder portion (130A) and a second holder portion (130B) configured to sandwich the torch main body (110) therebetween, and
the guard member (200, 200A) is fixed to the torch holder (130) by being sandwiched between the first holder portion (130A) and the second holder portion (130B).

4. The welding torch (100) according to claim 3, wherein
the guard member (200) includes
a first portion (210) located inside the torch holder (130) while the guard member (200) is fixed to the torch holder (130), and
a second portion (220)located outside the torch holder (130), and
the first portion (210) is in a wedge shape.

5. The welding torch (100) according to claim 4, wherein
each of the first holder portion (130A) and the second holder portion (130B) is provided with an opening (131) in a shape compatible with the first portion (210), and
the guard member (200) is fixed to the torch holder (130) by engagement of the first portion (210) with the opening in each holder portion.

6. The welding torch (100)according to claim 3, wherein
the guard member (200A) includes
a first portion (210A) located inside the torch holder (130) while the guard member (200A) is fixed to the torch holder (130), and
a second portion (220) located outside the torch holder (130), and
the welding torch (100) further comprises a fastening member (160) configured to fix the first portion (210A) to the torch holder (130).
